# EUROPÄISCHE PATENTANMELDUNG

(11) **EP 1 250 949 A1**
(43) Veröffentlichungstag der Anmeldung: **23.10.2002**
(21) Anmeldenummer: 02450078.7
(22) Anmeldetag: 08.04.2002
(51) Int. Cl.: B01D 47/12, F23J 15/00, F23J 15/04, F28D 1/00

(54) **Verfahren zur Anlage zur Rückgewinnung der latenten und fühlbaren Wärme von Abgasen**

(30) Priorität: 12.04.2001 AT 5992001
(71) Anmelder: Scheuch GmbH, 4971 Aurolzmünster (AT)
(72) Erfinder: Pretzl, Robert, 4680 Haag (AT); Lisberger, Manfred, 4752 Riedau (AT); Wernbacher, Bernd, 4971 Aurolzmünster (AT)
(74) Vertreter: Heger, Georg, Dipl.-Ing., Dr.

(57) **Zusammenfassung**

Verfahren und Anlage zur Rückgewinnung der latenten und fühlbaren Wärme von aus Feststofffeuerungen stammenden Abgasen mit anschließender Entschwadung der Abgase. Um eine hohe Energienutzung zu erzielen, durchströmen die Abgase eine turmartig aufgebaute Anlage von unten nach oben oder von oben nach unten, wobei die Wärmeauskopplung in mehreren hintereinander geschalteten Stufen (2, 5, 7) erfolgt, und wobei die zur Entschwadung benötigte Wärmeleistung beispielsweise über einen Luftvorwärmer (9) aus dem Abgas gewonnen wird.

## Beschreibung

Die Erfindung betrifft ein Verfahren zur Rückgewinnung der latenten und fühlbaren Wärme von aus Feststofffeuerungen stammenden Abgasen mit anschließender Entschwadung der Abgase. Weiters betrifft die Erfindung eine Anlage zur Durchführung dieses Verfahrens.

Eine Anlage zur Rückgewinnung der Wärme von aus Feststofffeuerungen stammenden Abgasen ist beispielsweise in der GB 2 065 500 A beschrieben. Dabei erfolgt in lediglich einer Stufe eine Wärmeauskopplung, welche ausschließlich über die Waschflüssigkeit erfolgt. Dabei wird die Wärme zuerst an das Waschwasser und von dort auf das eigentliche Kühlwasser, welches in keinem Kontakt zum Rauchgas steht, abgegeben. Durch die Wärmeauskopplung in nur einer Stufe kann nicht verhindert werden, dass es während des Abkühlens des Abgases zu einer Taupunktunterschreitung im Wärmetauscher kommt und die Betriebssicherheit gefährdende Ablagerungen entstehen können. Bei der Anlage gemäß der GB 2 065 500 A erfolgt darüber hinaus keine Entschwadung der Abgase.

Die Aufgabe der Erfindung besteht darin, eine Verbesserung der Energienutzung gegenüber bekannten Verfahren zu erzielen.

Die erfindungsgemäße Aufgabe wird dadurch gelöst, dass die Abgase eine Anlage durchströmen, in welcher die Wärmeauskopplung in mehreren hintereinander geschalteten Stufen erfolgt, und dass die zur Entschwadung benötigte Wärmeleistung aus dem Abgas gewonnen wird. Durch die Wärmeauskopplung in mehreren hintereinander geschalteten Stufen wird verhindert, dass es während des Abkühlens des Abgases zu einer Taupunktunterschreitung im Wärmetauscher kommt, womit die Entstehung von die Betriebssicherheit gefährdenden Ablagerungen verhindert wird. Durch die gezielte Wärmeauskopplung in mehreren aufeinander folgenden Stufen kann die abgeführte Wärme auch in mehreren unterschiedliche Temperaturniveaus rückgewonnen werden.

Hierbei können die Abgase eine turmartig aufgebaute Anlage von oben nach unten oder von unten nach oben durchströmen. Dabei kann eine allfällige Spülflüssigkeit im Gleichstrom oder im Gegenstrom zum Abgas durch die Anlage strömen. Wenn das Abgas von unten in die Anlage eintritt, und die einzelnen Wärmetauscher und Wäschestufen von unten her durchströmt werden, ergibt sich der Vorteil, dass das Kondensat bzw. Bedüsungswasser im Gegenstrom zum Abgas durch den Wäscher strömt, womit ein maximaler Reinigungseffekt bei optimaler Wärmeauskopplung erreicht werden kann.

Die Wärmeauskopplung in mehreren hintereinander geschalteten Stufen kann entweder zur Gänze trocken oder bei Bedarf auch nass erfolgen.

Nach einem weiteren Merkmal der Erfindung können die einzelnen Stufen diskontinuierlich gespült werden.

Hierbei kann die Spülintensität beispielsweise durch Zu- und Wegschalten von Düsensträngen oder Variieren der Pumpendrehzahl den jeweiligen Prozessbedingungen angepasst werden.

Wenn das Gas sehr feucht ist, kann nach einem weiteren Merkmal der Erfindung das Abgas bereits vor der ersten Wärmetauscherstufe gequencht werden. Dies hat den Vorteil, dass bei sehr feuchtem Abgas ohne vorhergehende zusätzliche Abgasreinigung durch Schlauch- oder Trocken-Elektro-Filter eine Betriebssicherheit der ersten Wärmetauscherstufe erreicht wird.

Nach einem weiteren Merkmal der Erfindung kann das bei der Spülung der untersten Wärmetauscherstufe bzw. beim Quenchen anfallende Wasser abgeführt oder in einem Ablagesumpf gesammelt und allenfalls einem Kreislauf zugeführt werden.

Gemäß einem weiteren Merkmal der Erfindung ist vorgesehen, dass die in einem Luftvorwärmer angesaugte Luft zur Entschwadung der Abgase entsprechend den Prozessbedingungen kontinuierlich geregelt wird, so dass der dabei aufgewendete elektrische Energieeinsatz zum Antrieb der zum Ansaugen der Entschwadungsluft benötigten Ventilatoren minimiert wird.

Dabei kann die Menge der Entschwadungsluft in Abhängigkeit der Umgebungstemperatur und bzw. oder der Umgebungsluftfeuchte, der relativen Luftfeuchte und bzw. oder der Temperatur der Mischluft aus Abgas und Entschwadungsluft geregelt werden.

Gelöst wird die erfindungsgemäße Aufgabe auch durch eine Anlage zur Durchführung des erfindungsgemäßen Verfahrens, welche aus mehreren im Turmaufbau hintereinander geschalteten Stufen zur Wärmeauskopplung besteht.

Nach einem weiteren Merkmal der Erfindung kann der Eintritt für das zu behandelnde Abgas in der untersten oder obersten Stufe vorgesehen sein.

Nach einem weiteren Merkmal der Erfindung weist jede Wärmetauscherstufe zur Reinigung derselben kopfseitig eine Spülanlage auf, deren Austritte für die Spülflüssigkeit nach unten bzw. entgegen der Strömungsrichtung der zu reinigenden Abgase gerichtet sind. Vorteilhafterweise sind im turmartigen Aufbau aufeinanderfolgend von unten nach oben oder von oben nach unten zumindest ein Quench, ein Wärmetauscher und ein Wassertrennboden vorgesehen.

Gemäß einem weiteren Merkmal der Erfindung kann im turmartigen Aufbau der Anlage eine Nasselektrofilterstufe vorgesehen sein.

Dabei kann dem ersten Wärmetauscher ein als Wäscher dienender Quench vorgeschaltet sein.

Zwischen dem Quench und dem Wärmetauscher kann eine Spülung vorgesehen sein, aus welcher das Spülwasser bzw. die Spülflüssigkeit gegen den Gasstrom austritt.

Der Wärmetauscherstufe kann ein Wassertrennboden folgen, durch welchen das Abgas zu einem als Schlitzbodenwäscher ausgebildeten Quench gelangt.

Gemäß einem weiteren Merkmal der Erfindung kann mindestens ein der Nasselektrofilterstufe folgender Luftvorwärmer als Kreuzstromwärmetauscher vorgesehen sein, wobei eine Regelvorrichtung z.B. ein Frequenzumformer-betriebener Ventilator mit einer Regelklappe zur Anpassung der angesaugten Luft zur Entschwadung der Abgase an die Prozessbedingungen vorgesehen ist.

Dabei kann mit der Regelvorrichtung eine Einrichtung zur Messung der Umgebungstemperatur und bzw. oder der Umgebungsluftfeuchte, der relativen Luftfeuchte und bzw. oder der Temperatur der Mischluft aus Abgas und Entschwadungsluft zur stufenlosen Anpassung der Entschwadungsluftmenge verbunden sein. Dadurch kann über die Messung der Umgebungstemperatur, der Umgebungsluftfeuchte, der relativen Luftfeuchte und der Temperatur der Mischluft aus Abgas und Entschwadungsluft die Entschwadungsluftmenge unabhängig von sonstigen Parametern, wie Kesselleistung oder Abgastaupunkt, vollautomatisch stufenlos so angepasst werden, dass keine Schwadenbildung am Kamin austritt/austreten kann.

Vorteilhafterweise sind die Düsenstränge der Spülungen zuund wegschaltbar, wodurch die Spülintensität den jeweiligen Prozessbedingungen angepasst werden kann.

Weiters kann ein Anlageteil, beispielsweise ein Vorlagebehälter, zum Sammeln des abgetropften Wassers und Zuführen desselben zu den Düsensträngen der Spülungen vorgesehen sein.

Schließlich können innerhalb oder außerhalb des Turmaufbaus untereinander im Heizkreis stehende Wärmetauscher vorgesehen sein, welche zur Reinigung allenfalls zerlegbar sind.

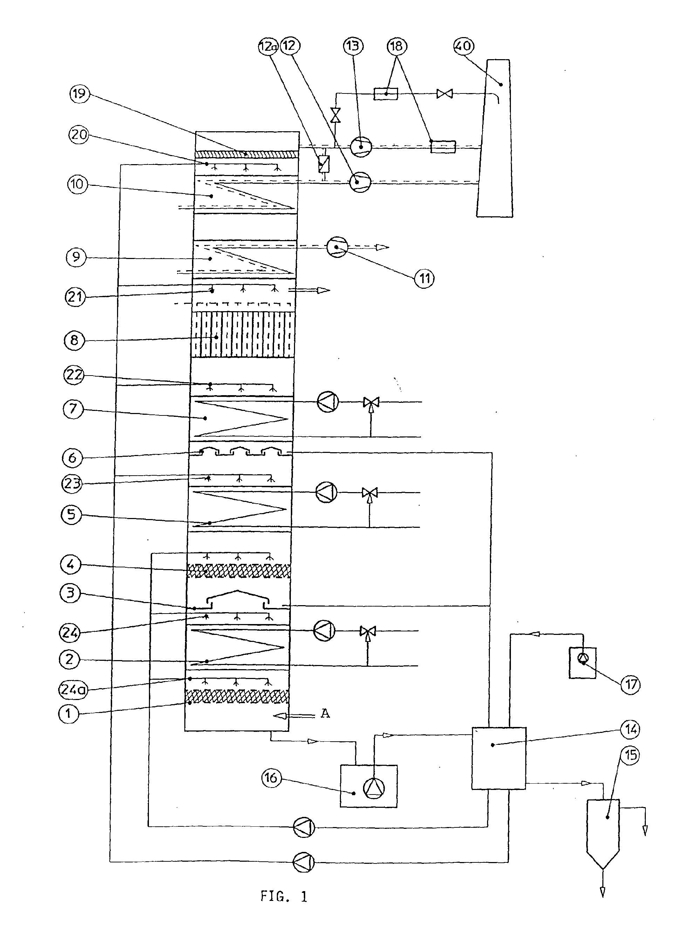

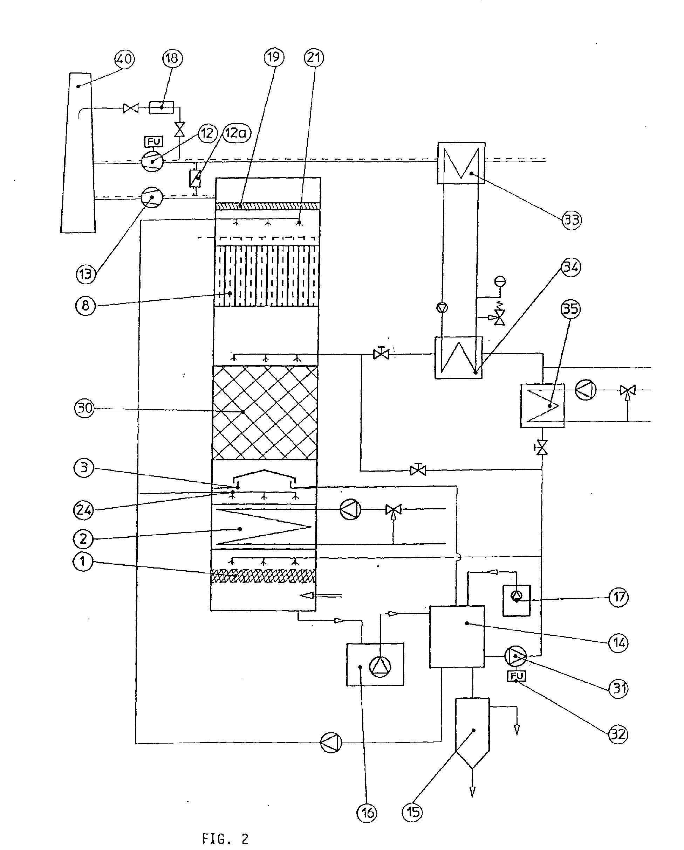

Weitere Merkmale der Erfindung werden anhand der beiliegenden Zeichnungen näher erläutert, in welchen die Fig. 1 und 2 jeweils ein Ausführungsbeispiel für eine Anlage zur Rückgewinnung der Wärme aus Abgasen zeigt.

Der turmartige Aufbau der schematisch dargestellten Anlage nach Fig. 1 umfasst einen Quench 1, einen Wärmetauscher 2 (ECO), einen Wassertrennboden 3, einen als Wäscher, vorzugsweise Schlitzbodenwäscher ausgebildeten Quench 4, einen zweiten Wärmetauscher 5 (KO1), einen zweiten Wassertrennboden 6, einen dritten Wärmetauscher 7 (KO2), eine Nass-Elektrofilterstufe 8, einen ersten Luftvorwärmer 9 (LUVO), einen zweiten Luftvorwärmer 10 (LUVO) und einen Tropfenabscheider 19, welcher zur Vermeidung von Tropfenauswurf aus dem Kamin 40 dient.

Das Abgas tritt in Richtung des Pfeiles A in den Quench 1 ein, welcher allenfalls nur bei Bedarf vorgesehen ist und als Wäscher dient, in dem das Abgas vor dem Eintritt in den ersten Wärmetauscher 2 gequencht wird und insbesondere, wie bereits erwähnt, bei sehr feuchtem Abgas ohne vorhergehende zusätzliche Abgasreinigung durch Schlauch- oder Trocken-Elektro-Filter für die Betriebssicherheit der ersten Wärmetauscherstufe 2 dient. Hierbei ist eine Spülung 24a vorgesehen, aus welcher das Spülwasser bzw. die Spülflüssigkeit gegen den Gasstrom austritt.

Die darauffolgende erste Wärmetauscherstufe 2 ist zur Reinigung des Wärmetauschers 2 ebenfalls mit einer Spüleinrichtung bzw. Spülung 24 ausgestattet, welche zur Reinigung des Wärmetauschers 2 dient, wobei die Spülflüssigkeit ebenfalls gegen den Gasstrom austritt.

Der ersten Wärmetauscherstufe 2 folgt ein Wassertrennboden 3, nach dessen Durchströmen das Abgas zu dem als Wäscher ausgebildeten eigentlichen Quench 4 gelangt, dessen Staub-Abscheideleistung durch Variieren der Wäschergeometrie und der Berieselungsdichte den Prozessbedingungen angepasst werden kann. Im Fall eines sehr niedrigen Abgastaupunktes kann die Berieselung auch ganz deaktiviert werden und der nachfolgende Wärmetauscher (KO1) 5 wird trocken betrieben, um somit eine maximale Wärmeauskopplung zu erreichen, wobei dies nur dann möglich ist, wenn über dem Wärmetauscher (KO1) 5 ein zweiter Wassertrennboden 6 eingebaut ist.

Bei ausreichender Niedertemperaturwärmeabnahme wird das Abgas im nachfolgenden Wärmetauscher (KO2) 7 weiter abgekühlt.

Je nach vorhandenem Rohgasstaubgehalt bzw. gefordertem Reingasstaubgehalt ist es möglich, in die Anlage eine zusätzliche Nass-Elektro-Filterstufe 8 zu integrieren, wodurch Reingasstaubgehalte unter 20 mg/Nm³ erreicht werden, was mit herkömmlichen Rauchgaskondensationen nur nach Vorschaltung eines Trocken-Elektrofilters, Schlauchfilters oder mit erheblichem Mehraufwand mit Hilfe von Wäschereinbauten und dem daraus resultierenden hohen Druckverlust möglich ist.

Die im Luftvorwärmer 10 angesaugte Entschwadungsluft wird entsprechend den Prozessbedingungen kontinuierlich über eine Regelvorrichtung, z.B. einen Frequenzumformer-betriebenen Ventilator 12 oder mit einer Regelklappe 12a dem Prozess angepasst, so dass der dabei aufgewendete elektrische Energieeinsatz zum Antrieb der zum Ansaugen der Entschwadungsluft benötigten Ventilatoren 12, 13 minimiert wird.

Bei Bedarf ist es möglich, dem Luftvorwärmer 10 noch einen weiteren Luftvorwärmer 9 zur Vorwärmung von Prozessluft vorzuschalten, wodurch die zur völligen Schwadenfreiheit benötigte Luftmenge verringert wird. Dabei wird die Luft mit Hilfe eines Ventilators 11 durch den Luftvorwärmer 9 transportiert.

Über der Wärmeaustauschstufe 7, der Nass-Elektro-Filterstufe 8 und dem Luftvorwärmer 10 ist eine Spülung 21 bzw. 20 vorgesehen, von welcher das Spülmittel ebenso wie bei den vorher erwähnten Spülungen zur Reinigung der Wärmetauscher gegen den Gasstrom rieselt. Mit den Spülungen 20, 21, 22, 23 und 24 werden die einzelnen Wärmetauscher in bestimmten Intervallen, abhängig vom Einbauort, regelmäßig gespült. Die Spülintensität kann den jeweiligen Prozessbedingungen angepasst werden, z.B. durch Zuund Wegschalten von Düsensträngen oder Variieren der Pumpendrehzahl. Die Wassertrennböden 3 und 6 dienen zum Schutz der Wärmetauscherstufen 2 und 5. Das auf diesen abgetropfte Wasser wird gesammelt und zu einem Anlageteil, im vorliegenden Falle einem Vorlagebehälter 14, eingeleitet, von dem es über eine oder mehrere Pumpen wieder den entsprechenden Bedüsungssträngen zugeführt werden kann und von wo auch die Abtrennung des überschüssigen Kondensats und des darin enthaltenen Feststoffes aus dem System erfolgt.

Die in der Nass-Elektro-Filterstufe ausgeschiedenen Feststoffe werden auf dem Wassertrennboden 6 gesammelt und von dort über das abfließende Kondensat oder Spülmittel wieder dem Vorlagebehälter zugeführt.

Das bei der Spülung der untersten Wärmetauscherstufe bzw. beim Quenchen anfallende Wasser wird in einem externen Behälter, z.B. im Anlagensumpf 16 gesammelt, von wo es dem Vorlagebehälter 14 zugeführt wird. Der externe Behälter ist lediglich über Rohrleitungen mit der eigentlichen Kondensationsanlage verbunden, wobei das Wasser dabei entweder direkt über eigene Rohrleitungen abläuft oder in einem eigenen Pumpensumpf gesammelt wird, von dort in den Behälter gepumpt wird und anschließend vom Behälter aus wieder dem Kreislauf zugeführt wird. Für den Fall, dass keine Beschränkungen in der Bauhöhe vorliegen, kann der Anlagesumpf entfallen, wobei das anfallende Wasser direkt in den Vorlagebehälter zugeführt wird.

Der Luftvorwärmer 9 kann ebenfalls ähnlich dem Luftvorwärmer 10 als Kreuzstromwärmetauscher ausgebildet sein.

Bei der erfindungsgemäßen Anlage zur Rückgewinnung der latenten und fühlbaren Wärme sowie zur Staubabscheidung von aus Feststofffeuerungen stammenden Abgasen mit anschließender vollautomatischer Entschwadung der Abgase, wird die zur Entschwadung des Abgases benötigte Wärmeleistung durch Wärmerückgewinnung aus dem Abgas mittels der Luftvorwärmer gewonnen. Hierbei beträgt der Taupunkt dieser Abgase üblicherweise zwischen 35°C und 70°C.

Gleiches gilt auch für die Anlage nach Fig. 2, die den Vorteil hat, dass die Wärmeauskoppelung über ein eigenes Wärmetauschersystem erfolgt. Dabei ist es möglich, einerseits Prozesswärme auszukoppeln und andererseits die zur Entschwadung benötigte Wärmemenge bereitzustellen.

Bei beiden Varianten ist ein besonderer Vorteil darin gelegen, dass eine vollautomatische Ausschleusung von Schlamm aus dem Sedimentationsbehälter entsprechend dem tatsächlichen Kondensatanfall durch Messung der Kondensatmenge oder der aus dem System ausgekoppelten Wärmemenge erzielt wird. Bei dieser Anlage ist der bei der Anlage nach Fig. 1 vorgesehene Quench 4 durch einen Quench 30 ersetzt, welcher für besseren Wärmeübergang verstärkt ausgeführt ist. Weiters sind die Wärmetauscher 5 und 7 sowie die Luftvorwärmer 9 und 10 nicht mehr vorhanden und stattdessen sind seitlich außerhalb des Turmes Freistromplattenwärmetauscher 34, 35 vorgesehen, wodurch die Bauhöhe des Turmes wesentlich herabgesetzt werden kann. Die Wärmetauscher 34, 35 können im Allgemeinen überall dort untergebracht werden, wo es die Platzverhältnisse zulassen.

Weiters kann der Luftvorwärmer 33 in diesem Fall räumlich getrennt von der Kondensationsanlage aufgestellt werden, wobei nun die Rohrleitung entsprechend verlängert werden muss.

Das Abgas gelangt nach Durchströmen des Wassertrennbodens 3 zum Wäscher 30, der in diesem Fall auch als Wärmetauscher dient. Das Abgas durchströmt die dem jeweiligen Prozess optimal angepassten Wäschereinbauten im Gegenstrom zu dem von oben herunterrieselndem Wasser und kühlt sich dabei ab. Das dabei erwärmte Wasser wird unter dem Wäscher 30 auf dem Wassertrennboden 3 gesammelt und wie bei der Variante nach Fig. 1 dem Vorlagebehälter 14 zugeführt, von wo es über die Prozesspumpe 31 wieder abgesaugt wird, die im Teillastbetrieb wahlweise mit einem Frequenzumrichter 32 zur Verringerung der Berieselungsdichte und somit der Betriebskosten ausgestattet sein kann. Die Nutzwärmeauskopplung erfolgt in den auf der Pumpendruckseite eingebauten Wärmetauschern 34, 35. Dabei ist es mögliche einerseits die Wärme in ein Heizungsnetz zu liefern und andererseits über einen separaten Heizkreis die zur Entschwadung benötigte Luft vorzuwärmen. Die Anlage nach Fig. 2 hat die Vorteile, dass sie noch kompakter gebaut werden, d.h. der Turm wird wesentlich niedriger, und durch die externe Wärmetauscheranordnung kann mann zusätzlich noch Kosten sparen. Das Wärmeträgermedium im Luftvorwärmer-Heizkreis kann mit einem Frostschutzmittel versetzt werden, so dass keine speziellen Frostschutzmaßnahmen mehr notwendig sind.

Je nach vorhandenem Rohgasstaubgehalt bzw. gefordertem Reingasstaubgehalt ist es möglich, in die Anlage ebenfalls eine zusätzliche Nass-Elektro-Filterstufe 8 zu integrieren, wodurch Reingasstaubgehalte unter 20 mg/Nm³ erreicht werden, was mit herkömmlichen Rauchgaskondensationen nur nach Vorschaltung eines Trocken-Elektrofilters, Schlauchfilters oder mit erheblichem Mehraufwand mit Hilfe von Wäschereinbauten und dem daraus resultierenden hohen Druckverlust möglich ist.

Die über den als Lamellenwärmetauscher ausgebildeten Luftvorwärmer 33 angesaugte Entschwadungsluft wird dabei entsprechend den Prozessbedingungen derart kontinuierlich über eine Regelvorrichtung, z.B. einen Frequenzumformer-betriebenen Ventilator 12 oder mit einer Regelklappe 12a, dem Prozess angepasst, dass der dabei aufgewendete elektrische Energieeinsatz zum Antrieb der zum Ansaugen der Entschwadungsluft benötigten Ventilatoren 12, 13 minimiert wird.

Zur Vermeidung von Tropfenauswurf aus dem Kamin 40 durchströmt das Gas ähnlich wie bei der Variante nach Fig. 1 als letzte Stufe einen Tropfenabscheider 19.

Aufgrund der Abscheidung des im Abgas enthaltenen Staubes und des Auskondensierens eines Teils der im Abgas enthaltenen Feuchtigkeit kommt es in der Anlage zu einer Anreicherung von Kondensat und Feststoffen, die durch vollautomatische Ausschleusung des überschüssigen Kondensats in einen nachgeschalteten Behälter (Sedimentationsbehälter) 15 transportiert werden und dort aussedimentieren. Der sich derartig am Boden ablagernde eingedickte Schlamm wird vollautomatisch aufgrund der anfallenden Kondensatmenge aus dem System ausgetragen. Weiters ist es notwendig, das Kreislaufwasser, dessen pH-Wert sich durch Abgasbestandteile, wie Noₓ, SO₂, etc. im sauren Bereich befindet, mit Hilfe eines basischen Mediums, das hier bei einer Dosieranlage 17 eingebracht wird, zu neutralisieren. Dabei kann es sich um Natronlauge handeln, aber auch um Wasser aus der Nassentaschung des Kessels.

Die Entschwadungsluftregelung erfolgt in folgender Weise:

Über die Messung der Umgebungstemperatur und bzw. oder der Umgebungsluftfeuchte, der relativen Luftfeuchte und bzw. oder der Temperatur der Mischluft aus Abgas und Entschwadungsluft wird die Entschwadungsluftmenge unabhängig von sonstigen Parametern, wie Kesselleistung oder Abgastaupunkt, vollautomatisch stufenlos so angepasst, dass keine Schwadenbildung am Kaminaustritt auftreten kann.

Ausgehend von einer vorgegebenen Umgebungstemperatur bzw. Umgebungsluftfeuchte gibt es zu jeder Mischtemperatur eine bestimmte maximal zulässige Luftfeuchtigkeit, bei der die Mischluft am Kaminaustritt gerade noch schwadenfrei ist. Übersteigt die gemessene Mischluftfeuchte diese maximal zulässige Luftfeuchte, so ist die Entschwadungsluftmenge entsprechend zu erhöhen.

Um bei sehr niedrigen Außentemperaturen zu vermeiden, dass Teile des Wärmetauschers durch gefrierendes Kondensat zerstört werden, wird die Entschwadungsluftmenge in diesem Fall entsprechend reduziert.

Die Messung der relativen Luftfeuchtigkeit sowie der Temperatur der Mischluft 18 erfolgt dabei entweder direkt in der Mischluftleitung (bei Entschwadungsregelung mit einer Regelklappe) oder durch Entnahme eines Teilstromes aus dem Kamin 40 (bei Entschwadungsregelung mit Ventilator).

Der besondere Vorteil des erfindungsgemäßen Verfahrens und der erfindungsgemäßen Anlage besteht darin, dass die Entschwadungsluftmenge nach der Mischluftfeuchte geregelt wird und die Wärmetauscher unter Vermeidung eines Mischbetriebes in den einzelnen Wärmetauscherstufen, d.h. Wärmetauscher entweder komplett trocken oder komplett nass durch Quenchen des Rauchgases am Eintritt betrieben werden können. Ein weiterer Vorteil ergibt sich durch die Reinigung der einzelnen Wärmetauscher mittels Berieselung und die Sammlung und Pufferung des Prozesswassers in einem externen Vorlagebehälter, der lediglich über Rohrleitungen mit der eigentlichen Kondensationsanlage verbunden ist. Das in der Anlage zirkulierende Wasser läuft entweder direkt über eigene Rohrleitungen zum Vorlagebehälter ab oder wird in einem eigenen Pumpensumpf, der nur über Rohrleitungen mit der Anlage verbunden ist, gesammelt und von dort wieder in den Vorlagebehälter transportiert.

Für den Fall der Umkehr der Stromrichtung, statt von unten nach oben von oben nach unten, müssen natürlich auch die einzelnen Segmente in umgekehrter Reihenfolge zu einer turmartigen Anlage aufgebaut werden.

Selbstverständlich können im Rahmen der Erfindung verschiedene konstruktive Änderungen durchgeführt werden. So besteht die Möglichkeit, für den Fall, dass genügend Baufläche in horizontaler Ebene vorhanden ist und Schwierigkeiten bezüglich der Höhe eines Turmes bestehen, die einzelnen durchzuströmenden Segmente nebeneinander anzuordnen.

## Patentansprüche

1. Verfahren zur Rückgewinnung der latenten und fühlbaren Wärme von aus Feststofffeuerungen stammenden Abgasen mit anschließender Entschwadung der Abgase, **dadurch gekennzeichnet, dass** die Abgase eine Anlage durchströmen, in welcher die Wärmeauskopplung in mehreren, hintereinander geschalteten Stufen erfolgt, und dass die zur Entschwadung benötigte Wärmeleistung aus dem Abgas gewonnen wird.

2. Verfahren nach Anspruch 1, **dadurch gekennzeichnet, dass** die Abgase eine turmartig aufgebaute Anlage von oben nach unten oder von unten nach oben durchströmen.

3. Verfahren nach Anspruch 1 oder 2, **dadurch gekennzeichnet, dass** allfällige Spülflüssigkeit im Gleichstrom oder im Gegenstrom zum Abgas durch die Anlage strömt.

4. Verfahren nach den Ansprüchen 1 oder 2, **dadurch gekennzeichnet, dass** die Wärmeauskopplung entweder zur Gänze trocken oder bei Bedarf auch nass erfolgt.

5. Verfahren nach mindestens einem der vorangehenden Ansprüche, **dadurch gekennzeichnet, dass** die einzelnen Stufen diskontinuierlich gespült werden.

6. Verfahren nach Anspruch 5, **dadurch gekennzeichnet, dass** die Spülintensität durch Zu- und Wegschalten von Düsensträngen oder Variieren der Pumpendrehzahl den jeweiligen Prozessbedingungen angepasst wird.

7. Verfahren nach mindestens einem der vorangehenden Ansprüche, **dadurch gekennzeichnet, dass** das Abgas bereits vor der ersten Stufe gequencht wird.

8. Verfahren nach mindestens einem der vorangehenden Ansprüche, dadurch gekennzeichnt, dass das bei der Spülung der untersten Stufe bzw. beim Quenchen anfallende Wasser abgeführt oder in einem Ablagesumpf gesammelt und allenfalls einem Kreislauf zugeführt wird.

9. Verfahren nach einem der vorangehenden Ansprüche, **dadurch gekennzeichnet, dass** die in einem Luftvorwärmer angesaugte Luft zur Entschwadung der Abgase entsprechend den Prozessbedingungen kontinuierlich geregelt wird, so dass der dabei aufgewendete elektrische Energieeinsatz zum Antrieb der zum Ansaugen der Entschwadungsluft benötigten Ventilatoren minimiert wird.

10. Verfahren nach Anspruch 9, **dadurch gekennzeichnet, dass** die Menge der Entschwadungsluft in Abhängigkeit der Umgebungstemperatur und bzw. oder der Umgebungsluftfeuchte, der relativen Luftfeuchte und bzw. oder der Temperatur der Mischluft aus Abgas und Entschwadungsluft geregelt wird.

11. Anlage zur Durchführung des Verfahrens nach mindestens einem der vorangehenden Ansprüche, **dadurch gekennzeichnet, dass** die Anlage aus mehreren im Turmaufbau hintereinander geschalteten Stufen (2, 5, 7) zur Wärmeauskopplung besteht.

12. Anlage nach Anspruch 11, **dadurch gekennzeichnet, dass** der Eintritt (A) für das zu behandelnde Abgas in der untersten oder obersten Stufe vorgesehen ist.

13. Anlage nach Anspruch 11, **dadurch gekennzeichnet, dass** jede Wärmetauscherstufe (2, 5, 7) zur Reinigung derselben kopfseitig eine Spülanlage (22, 23, 24) aufweist, deren Austritte für die Spülflüssigkeit nach unten bzw. entgegen der Strömungsrichtung der zu reinigenden Abgase gerichtet sind.

14. Anlage nach Anspruch 11, **dadurch gekennzeichnet, dass** im turmartigen Aufbau aufeinanderfolgend von unten nach oben oder von oben nach unten zumindest ein Quench (1), ein Wärmetauscher (2), und ein Wassertrennboden (3) vorgesehen sind.

15. Anlage nach einem der Ansprüche 11 bis 14, **dadurch gekennzeichnet, dass** im turmartigen Aufbau eine Nass-Elektro-Filterstufe (8) vorgesehen ist.

16. Anlage nach Anspruch 15, **dadurch gekennzeichnet, dass** dem ersten Wärmetauscher (2) ein als Wäscher dienender Quench (1) vorgeschaltet ist.

17. Anlage nach Anspruch 16, **dadurch gekennzeichnet, dass** zwischen Quench (1) und Wärmetauscher (2) eine Spülung (24a) vorgesehen ist, aus welcher das Spülwasser bzw. die Spülflüssigkeit gegen den Gasstrom austritt.

18. Anlage nach Anspruch 17, **dadurch gekennzeichnet, dass** der Wärmetauscherstufe (2) ein Wassertrennboden (4) folgt, durch welchen das Abgas zu einem als Schlitzbodenwäscher ausgebildeten Quench (4) gelangt.

19. Anlage nach einem der Ansprüche 15 bis 18, **dadurch gekennzeichnet, dass** mindestens ein der Nass-Elektro-Filterstufe (8) folgender Luftvorwärmer (10) als Kreuzstromwärmetauscher vorgesehen ist, wobei eine Regelvorrichtung, zum Beispiel ein Frequenzumformer-betriebener Ventilator (12) mit einer Regelklappe (12a) zur Anpassung der angesaugten Luft zur Entschwadung der Abgase an die Prozessbedingungen vorgesehen ist.

20. Anlage nach Anspruch 19, **dadurch gekennzeichnet, dass** mit der Regelvorrichtung eine Einrichtung zur Messung der Umgebungstemperatur und bzw. oder der Umgebungsluftfeuchte, der relativen Luftfeuchte und bzw. oder der Temperatur der Mischluft aus Abgas und Entschwadungsluft zur stufenlosen Anpassung der Entschwadungsluftmenge verbunden ist.

21. Anlage nach einem der Ansprüche 11 bis 20, **dadurch gekennzeichnet, dass** die Düsenstränge der Spülungen (20, 21, 22, 23, 24) zu- und wegschaltbar sind.

22. Anlage nach einem der Ansprüche 11 bis 21, **dadurch gekennzeichnet, dass** ein Anlageteil, beispielsweise ein Vorlagebehälter (14) zum Sammeln des abgetropften Wassers und Zuführen desselben zu den Düsensträngen der Spülungen (20, 21, 22, 23, 24) vorgesehen ist.

23. Anlage nach einem der Ansprüche 11 bis 22, **dadurch gekennzeichnet, dass** innerhalb oder außerhalb des Turmaufbaues untereinander im Heizkreis stehende Wärmetauscher (34, 35) vorgesehen sind, welche zur Reinigung allenfalls zerlegbar sind.
